# EUROPÄISCHE PATENTSCHRIFT

(11) **EP 2 802 430 B1**
(45) Veröffentlichungstag und Bekanntmachung des Hinweises auf die Patenterteilung: **10.11.2021**
(21) Anmeldenummer: 13701588.9
(22) Anmeldetag: 14.01.2013
(51) Int. Cl.: B22F 1/00, B22F 1/02, H01M 4/00

(54) **VERFAHREN ZUR HERSTELLUNG STABILISIERTER MIT LEGIERUNGSBILDENDEN ELEMENTEN BESCHICHTETEN LITHIUMMETALLABFORMUNGEN**
METHOD FOR PRODUCTION OF STABILIZED LITHIUM METAL PARTICLES COATED WITH ALLOY-FORMING ELEMENTS
PROCÉDÉ DE PRODUCTION DES MOULAGES À BASE DE MÉTAL LITHIUM STABILISÉS, REVÊTUS D'ÉLÉMENTS FORMANT DES ALLIAGES

(30) Priorität: 13.01.2012 DE 102012200479
(43) Veröffentlichungstag der Anmeldung: 19.11.2014
(73) Patentinhaber: Albemarle Germany GmbH, 65926 Frankfurt am Main (DE)
(72) Erfinder: WIETELMANN, Ulrich, 61381 Friedrichsdorf (DE); HARTNIG, Christoph, 65817 Eppstein (DE); EMMEL, Ute, 65929 Frankfurt am Main (DE)
(74) Vertreter: Uexküll & Stolberg
(86) Internationale Anmeldenummer: PCT/EP2013/050570
(87) Internationale Veröffentlichungsnummer: WO 2013/104787

(56) Entgegenhaltungen:
- WO-A2-02/41416
- US-A1- 2009 061 321
- GRANT A. UMEDA ET AL: "Protection of lithium metal surfaces using tetraethoxysilane", JOURNAL OF MATERIALS CHEMISTRY, Bd. 21, Nr. 5, 1. Januar 2011 (2011-01-01) , Seite 1593, XP055059730, ISSN: 0959-9428, DOI: 10.1039/c0jm02305a in der Anmeldung erwähnt
- FILIPPO MARCHIONI ET AL: "Protection of Lithium Metal Surfaces Using Chlorosilanes", LANGMUIR, Bd. 23, Nr. 23, 1. November 2007 (2007-11-01), Seiten 11597-11602, XP055059763, ISSN: 0743-7463, DOI: 10.1021/la701662r
- None

## Beschreibung

Beschrieben werden partikelförmige mit legierungsbildenden Elementen der 3. und 4. Hauptgruppe des PSE stabilisierte Lithiummetall-Kompositmaterialien sowie Verfahren zu deren Herstellung durch Umsetzung von Lithiummetall mit Filmbildungs-Elementprecursoren bei Temperaturen zwischen 180,5 und 300°C, über der Lithiumschmelztemperatur, in einem organischen, inerten Lösungsmittel.

Lithium gehört zu den Alkalimetallen. Wie auch die schwereren Elementhomologa der ersten Hauptgruppe ist es durch ein starkes Reaktionsvermögen gegenüber einer Vielzahl von Stoffen gekennzeichnet. So reagiert es heftig, häufig unter Entzündung mit Wasser, Alkoholen und anderen Stoffen, die protischen Wasserstoff enthalten. An Luft ist es unbeständig und es reagiert mit Sauerstoff, Stickstoff und Kohlendioxid. Es wird deshalb normalerweise unter Inertgas (Edelgase wie Argon) gehandhabt und unter einer schützenden Schicht aus Paraffinöl gelagert.

Des Weiteren reagiert es mit vielen funktionalisierten Lösungsmitteln, selbst wenn diese keinen protischen Wasserstoff enthalten. Beispielsweise werden zyklische Ether wie THF unter Ringspaltung geöffnet, Ester und Carbonylverbindungen werden generell lithiiert und/oder reduziert. Häufig wird die Reaktion zwischen den genannten Chemikalien bzw. Umweltstoffen durch Wasser katalysiert. So kann Lithiummetall in trockener Luft über längere Zeiträume gelagert und verarbeitet werden, da es eine einigermaßen stabile Passivierungsschicht ausbildet, die weitergehende Korrosion verhindert. Ähnliches gilt für funktionalisierte Lösemittel, beispielsweise N-Methyl-2-pyrrolidon (NMP), welches in wasserfreier Form wesentlich weniger reaktiv gegenüber Lithium ist als z.B. mit Wassergehalten > einige 100 ppm.

Um die Lagerfähigkeit von Lithiummetall und die Sicherheit bei der Verarbeitung zu erhöhen, wurde eine Reihe von korrosionsvermindernden Beschichtungsverfahren entwickelt. So ist es beispielsweise aus US 5,567,474 und US 5,776,369 bekannt, geschmolzenes Lihiummetall mit CO₂ zu behandeln. Für die Beschichtung wird typischerweise flüssiges Lithium in einem inerten Kohlenwasserstoff mindestens 1 Minute mit mindestens 0,3 % CO₂ in Verbindung gebracht. Der damit bewirkte Schutz reicht aber für viele Anwendungen, speziell für die Vorlithiierung von Batterieelektrodenmaterialien in N-Methyl-2-pyrrolidon (NMP)-Suspension, nicht aus.

Eine weitere Methode, Lithiummetall zu stabilisieren besteht darin, es über seinen Schmelzpunkt zu erhitzen, das geschmolzene Lithium zu rühren und es mit einem Fluorierungsmittel, beispielsweise Perfluoropentylamin, in Kontakt zu bringen (WO 2007/005983 A2). Nachteilig ist, dass Fluorierungsmittel häufig giftig oder ätzend sind und deshalb in der industriellen Praxis ungern eingesetzt werden.

Ein weiteres Verfahren zur schützenden Oberflächenbehandlung von Lithiummetall besteht darin, es mit einer Wachsschicht, beispielsweise einem Polyethylenwachs zu beschichten (WO 2008/045557 A1). Nachteilig ist, dass relativ viel Beschichtungsmittel aufzuwenden ist. In den Beispielen der genannten Patentanmeldung etwa 1 %.

US 2008/0283155 A1 beschreibt ein Verfahren zur Stabilisierung von Lithiummetall, das durch folgende Schritte gekennzeichnet ist:
a) Erhitzen von Lithiummetallpulver über den Schmelzpunkt, um geschmolzenes Lithiummetall herzustellen,
b) Dispergieren des geschmolzenen Lithiummetalls; und
c) Inkontaktbringen des geschmolzenen Lithiummetalls mit einer Phosphor enthaltenden Substanz, um eine im wesentlichen kontinuierliche Schutzschicht von Lithiumphosphat auf dem Lithiummetallpulver zu erzeugen. Das Hantieren mit sauren, ätzenden Stoffen (Phosphorsäure) generell und insbesondere in Gegenwart von Lithiummetall ist nachteilig: die beiden Stoffe reagieren beim Inkontaktbringen sehr heftig unter erheblicher Wärmefreisetzung miteinander. Darüber hinaus entsteht bei der Umsetzung von Lithiummetall mit Phosphorsäure explosionsgefährliches Wasserstoffgas.

In US 2009/0061321 A1 wird vorgeschlagen, ein stabilisiertes Lithiummetallpulver mit einer im Wesentlichen kontinuierlichen Polymerbeschichtung herzustellen. Das Polymer kann ausgewählt sein aus der Gruppe Polyurethane, PTFE, PVC, Polystyrol u.a. Nachteilig an diesem Verfahren ist, dass das geschützte Lithiummetall eine undefinierte Oberflächenbeschichtung organischer Substanzen bekommt, die bei seiner nachfolgenden Verwendung, beispielsweise für die Vorlithiierung von Elektrodenmaterialien, stören können.

Schließlich ist eine Anode für eine elektrochemische Zelle, die ein metallisches Material mit einer sauerstoffhaltigen Beschichtung enthält, mit einer weiteren Schutzschicht, welche durch Umsetzung von D oder P-Block-Precursoren mit dieser sauerstoffhaltigen Schicht entsteht, bekannt (WO 2010/101856 A1, US 2007/0082268 A1, US 2009/0220857 A1). Die Schutzschicht des Metallanodenmaterials wird hergestellt durch Behandlung eines metallischen Materials, welches eine sauerstoffhaltige Beschichtung aufweist, mit mindestens zwei Verbindungen, wobei die erste Verbindung eine große Molekülverbindung und die zweite Verbindung eine kleine Molekülverbindung ist (US 7,776,385 B2, US 2011/0104366 A1). Bei dieser Art der Schutzschichtbildung reagieren sauerstoffhaltige Oberflächengruppen (beispielsweise Hydroxyfunktionen) mit den D- oder P-Blockprecursoren, beispielsweise einem Kieselsäureester, in einem nicht-hydrolytischen Sol-Gel Prozess miteinander und es bildet sich auf der Anodenoberfläche beispielsweise ein Film bestehend aus SiO₂. Die chemischen Reaktionen können wie folgt formuliert werden (G.A. Umeda et al. J.Mater. Chem. 2011, 21, 1593-1599):

LiOH + Si(OR)₄ → LiOSi(OR)₃ + ROH

SiOR + ROSi → Si-O-Si + ROR

Nachteilig an diesem Verfahren ist, dass es mehrstufig ist, d.h. zunächst wird das metallische Material, beispielsweise Lithiummetall, mit einer sauerstoffhaltigen Schicht versehen und dann nacheinander mit zwei verschiedenen Molekülverbindungen (D- oder P-Block-Precursoren) umgesetzt. Letztlich beschreibt auch die Publikation FILIPPO MARCHIONI ET AL: "Protection of Lithium Metal Surfaces Using Chlorosilanes", LANGMUIR, Bd. 23, Nr. 23, 1 . November 2007 (2007 -11-01 ), Seiten 11597-11602, einen ähnlichen Schutz von Lithiummetalloberflächen durch Tauchen von Lithiummetalldraht oder -folie in Lösungen verschiedener Chlorsilane in Propylencarbonat bei Raumtemperatur.

Die Erfindung hat sich die Aufgabe gestellt, Verfahren zur Herstellung von Lithiummetallabformungen mit einer passivierenden Deckschicht anzugeben,
- welche ohne Verwendung gasförmiger oder saurer, ätzender oder giftiger Passivierungsmittel auskommen,
- die die Ausbildung einer passivierenden Schutzschicht bestehend aus einem gemischten anorganisch/organischem schwerlöslichen Film auf der Lithiumoberfläche bewirken und
- deren Oberflächenbeschichtung beim Einsatz beispielsweise als Vorlithiierungsmittel für Anodenmaterialien nicht stört und
- die in der Oberflächenschicht Elemente enthalten, die eine Affinität zu üblicherweise verwendeten Bindern aufweisen.

Solche Lithiummetallabformungen sollten in Gegenwart polarer, reaktiver Lösungsmittel, wie sie für die Herstellung von Elektrodenbeschichtungen eingesetzt werden, also beispielsweise NMP, mindestens bis etwa 50°C über Tage stabil sein.

Erfindungsgemäß wird die Aufgabe dadurch gelöst, dass zur Herstellung einer partikelförmigen, stabilisierten mit legierungsbildenden Elementen beschichteten Lithiummetallabformung Lithiummetall mit Filmbildungs-Precursoren enthaltend Elemente der 3. und 4. Hauptgruppe des PSE, wobei als Filmbildungs-Precursor(en) ein oder mehrere Passivierungsmittel der allgemeinen Formeln I oder II:

[AR¹R²R³R⁴]Liₓ (I),

oder

R¹R²R³A-0-AR⁴R⁵R⁶ (II)

worin bedeuten:
- R¹R²R³R⁴R⁵R⁶ = unabhängig voneinander Alkyl (C₁-C₁₂), Aryl, Alkoxy Aryloxy- oder Halogen (F, Cl, Br, I); oder zwei Reste R bedeuten zusammengenommen ein 1,2-Diolat (z.B. 1,2-Ethandiolat), ein 1,2- oder 1,3-Dicarboxylat (z.B. Oxalat oder Malonat) oder ein 2-Hydroxycarboxylatdianion (z.B. Lactat, Glykolat oder Salicylat);
- die Reste R¹ bis R⁶ können weitere funktionelle Gruppen enthalten, beispielsweise Alkoxygruppen;
- A = Bor, Aluminium, Gallium, Indium, Thallium, Silicium, Germanium, Zinn,Blei;
- x = 0 oder 1 für B, Al, Ga, In, Tl;
- x = 0 für Si, Ge, Sn, Pb;
- im Falle x = 0 und A = B, Al, Ga, In, Tl entfällt R⁴
eingesetzt werden, bei Temperaturen im Bereich über der Lithiumschmelztemperatur von 180,5°C und 300°C, unter Inertgas in einem organischen, inerten Lösungsmittel als Emulsion des Metalls im Lösungsmittel in Kontakt gebracht wird.

Verbindungen mit Halogenbindungen können im Kontakt mit Lithium teilweise unter Bildung von Lithiumhalogenid gespalten werden. Das Lithiumhalogenid kann, da es im verwendeten inerten Lösemittel auf Kohlenwasserstoffbasis nicht inerten Lösungsmittel als Emulsion des Metalls im Lösungsmittel in Kontakt gebracht wird.

Verbindungen mit Halogenbindungen können im Kontakt mit Lithium teilweise unter Bildung von Lithiumhalogenid gespalten werden. Das Lithiumhalogenid kann, da es im verwendeten inerten Lösemittel auf Kohlenwasserstoffbasis nicht löslich ist, in der Coatingschicht abgeschieden werden, d.h. es bildet sich ein Lithium, das in seiner Oberfläche auch Lithiumhalogenid enthalten kann. Beim Einsatz eines solchen Pulvers in einer Lithiumbatterie, die in der Regel Flüssigelektrolyte enthält, die wiederum polare organische Lösungsmittel enthalten, löst sich das Lithiumhalogenid und es kann dann mit allen Batteriekomponenten in Berührung kommen. Es ist bekannt, dass Lithiumhalogenide, besonders LiCI, LiBr und Lil korrosiv auf aus Aluminium bestehende Kathodenstromableiter wirken. Durch diesen Angriff wird die kalendarische Lebenszeit der Batterie in Mitleidenschaft gezogen (siehe z.B. H.B. Han, J. Power Sources 196 (2011) 3623-32). Im Falle von Gehäusen oder Stromableitern aus Aluminium ist die Verwendung von mit halogenfreien Passivierungsmitteln behandelten Lithiumabformungen bevorzugt.

Als Lithiumquelle wird bevorzugt eine reine, d.h. insbesondere natriumarme Qualität verwendet. Solche Metallqualitäten sind als "battery grade" im Handel. Bevorzugt liegt der Na-Gehalt < 200 ppm und besonders bevorzugt < 100 ppm. Es wurde überraschend gefunden, dass beim Einsatz natriumarmen Lithiummetalls ganz besonders stabile, sicher handhabbare Produkte gewonnen werden können.

Die Umsetzung zwischen dem Lithiummetall und einem oder mehreren der erfindungsgemäßen Passivierungsmittel erfolgt im Temperaturbereich zwischen schmelzflüssigem Lithium und 300°C, d.h. die Umsetzungstemperatur liegt bei mindestens 180,5°C und es werden sphärische Lithiumpartikel (also Lithiumpulver oder -granulat bestehend aus kugelförmigen Partikeln) erzeugt und in geschmolzener Form mit einem erfindungsgemäßen Passivierungsmittel behandelt. Das Lithium wird zunächst unter Inertgas (Edelgas, beispielsweise trockenes Argon) in einem organischen, inerten Lösungsmittel oder Lösemittelgemisch (in der Regel kohlenwasserstoffbasiert) bis über die Schmelzpunkttemperatur des Lithiums (180,5°C) aufgewärmt. Dieser Prozess kann beim Einsatz von Lösungsmitteln mit Siedetemperaturen > 180°C (beispielsweise Undekan, Dodekan oder entsprechenden handelsüblichen Mineralölgemischen, beispielsweise Shellsole) bei Normaldruck erfolgen. Werden demgegenüber leichter flüchtige Kohlenwasserstoffe wie z.B. Hexan, Heptan, Octan, Dekan, Toluol, Ethylbenzol oder Cumol eingesetzt, so erfolgt der Aufschmelzprozess in einem geschlossenen Gefäß unter Druckbedingungen.

Nach dem vollständigen Aufschmelzen wird eine Emulsion des Metalls im Kohlenwasserstoff hergestellt. Je nach erwünschten Partikelgeometrien (Durchmesser) geschieht dies durch Homogenisieren mit Rührwerkzeugen, die die für die jeweilige Abformung notwendigen Scherkräfte einbringen. Soll beispielsweise ein Pulver mit Partikelgrößen unter 1 mm hergestellt werden, kann beispielsweise eine Dispergierscheibe verwendet werden. Die genauen Dispergierparameter (d.h. hauptsächlich die Rotationsgeschwindigkeit und die Dispergierzeit) richten sich nach der gewünschten Partikelgröße. Sie sind weiterhin von der Viskosität des Dispergierlösemittels sowie individuellen geometrischen Parametern des Rührorgans (z.B. Durchmesser, genaue Stellung und Größe der Zähnung) abhängig. Die Feinabstimmung des Dispergierverfahrens zur Bereitung der gewünschten Partikelverteilung kann der Fachmann durch entsprechende Experimente leicht ermitteln.

Sollen Lithiumpartikel im Korngrößenbereich zwischen 5 und 100 µm hergestellt werden, so beträgt die Rührfrequenz im Allgemeinen zwischen 1.000 und 25.000 Umdrehungen pro Minute (upm), bevorzugt 2.000 bis 20.000 upm. Die Dispergierzeit, d.h. der Zeitraum, innerhalb dessen das Dispergierwerkzeug mit voller Leistung läuft, beträgt zwischen 1 und 60 Minuten, vorzugsweise 2 und 30 Minuten. Sind besonders feinteilige Partikeln erwünscht, so können höchsttourige Spezialwerkzeuge, die z.B. unter der Bezeichnung "Ultraturrax" im Handel erhältlich sind, verwendet werden.

Das Passivierungsmittel kann bereits zusammen mit dem Metall und dem Lösungsmittel vor Beginn der Aufheizphase zugegeben werden. Bevorzugt wird es aber erst nach dem Aufschmelzen des Metalls, d.h. bei Temperaturen > 180,5°C zugegeben. Die Zugabe kann unkontrolliert (d.h. in einer Portion) während des Dispergierprozesses erfolgen. Bevorzugt wird das Passivierungsmittel aber über einen Zeitraum von ca. 5 s bis 5000 s, besonders bevorzugt 30 s bis 1000 s zugegeben.

Als Passivierungsmittel werden die molekularen oder "at"- Verbindungen der allgemeinen Formeln I oder II oder Polymere, die mit Lithium legierbare Elemente der 3. oder/und 4. Hauptgruppe des PSE enthalten, verwendet. Besonders bevorzugt sind Verbindungen des Bors, Aluminiums, Siliciums und Zinns. Beispiele für besonders bevorzugte Passivierungsmittel sind:
- Borsäureester der allgemeinen Formel B(OR)₃,
- Bor-und Aluminiumhalogenide B(Hal)₃ bzw. Al(Hal)₃,
- Lithiumborate und -aluminate der Formeln Li[B(OR)₄] bzw. Li[Al(OR)₄],
- Aluminiumalkoholate der allgemeinen Formel Al(OR)₃,
- Alkylaluminiumverbindungen der allgemeinen Formel AlR₃₋ₙHalₙ (n = 0, 1 oder 2),
- Silicium- und Zinnhalogenide Si(Hal)₄ und Sn(Hal)₄,
- Kieselsäureester Si(OR)₄ und Zinnalkoholate Sn(OR)₄,
- Disiloxane und Distannoxane R₃Si-O-SiR₃ und R₃Sn-O-SnR₃,
- Alkylverbindungen des Siliciums und Zinns, SiR₄, SnR₄,
- gemischte Alkylhalogenverbindungen des Siliciums und Zinns SiR₄₋ₙHalₙ (n = 1, 2 oder 3) bzw. SnR₄₋ₙHalₙ (n = 1, 2 oder 3), gemischte Alkylalkoxyverbindungen des Siliciums und Zinns SiR₄₋ₙ(OR)ₙ (n = 1, 2 oder 3) bzw. SnR₄₋ₙ(OR)ₙ (n = 1, 2 oder 3),
mit Hal = F, Cl, Br, I; R = Alkyl-, Alkenyl- oder Arylrest oder zwei Reste R bedeuten zusammengenommen ein 1,2-Diolat (z.B. 1,2-Ethandiolat), ein 1,2-oder 1,3-Dicarboxylat (z.B. Oxalat oder Malonat) oder ein 2-Hydroxycarboxylatdianion (z.B. Salicylat, Glykolat oder Lactat).

Die Passivierungsmittel werden entweder in reiner Form oder gelöst in einem gegenüber Lithiummetall inerten Lösungsmittel (also beispielsweise Kohlenwasserstoffen) oder einem wenig reaktiven aprotischen Lösemittel (beispielsweise einem Ether) zur Mischung aus Lithiummetall und dem aprotischen, inerten Lösungsmittel zugegeben. Nach Zugabe des Passivierungsmittels schließt sich eine Nachreaktionsphase an, während der die Umsetzung vervollständigt wird. Die Länge der Nachreaktionsphase hängt von der Umsetzungstemperatur und der Reaktivität des gewählten Passivierungsmittels gegenüber dem Lithiummetall ab.
Die mittlere Partikelgröße der erfindungsgemäßen Metallpulver liegt bei maximal 5000 µm, bevorzugt maximal 1000 µm und besonders bevorzugt maximal 300 µm.

Im Sinne der Erfindung ist es auch möglich, eine mehrstufige Passivierung vorzunehmen, wobei mindestens einmal eines oder mehrere des/der erfindungsgemäßen Passivierungsmitteln verwendet wird/werden. Beispielsweise kann zunächst eine Passivierung nach Stand der Technik mit Fettsäuren oder Fettsäureestern vorgenommen werden und das erhaltene partikuläre Lithiummetall durch ein Zusatzcoating mit einem der erfindungsgemäßen Passivierungsmittel noch weiter stabilisiert werden. Diese Zusatzpassivierung wird in einem Kohlenwasserstofflösemittel bevorzugt bei Temperaturen unterhalb des Lithiumschmelzpunktes (also < 180,5°C) vorgenommen.

Die Menge des für die Oberflächenbeschichtung verwendeten Passivierungsmittels richtet sich nach der Partikelgröße, der chemischen Struktur des Passivierungsmittels und der gewünschten Schichtdicke. Im Allgemeinen beträgt das Molverhältnis zwischen Li-Metall und Passivierungsmittel 100:0,01 bis 100:5, bevorzugt 100:0,05 bis 100:1.

Beim Einsatz der bevorzugten Passivierungsmittelmenge resultieren Lithiummetallprodukte mit Gehalten > 95%, bevorzugt > 97%.

Die erfindungsgemäß passivierte Lithiummetallabformung enthält überraschenderweise das legierungsbildende Element A zumindest teilweise in elementarer Form oder in Form einer Legierung mit dem Lithium. So bildet sich bei der Umsetzung von erfindungsgemäßen Si-haltigen Passivierungsmitteln mit metallischem Lithium Silicium, das in einem zweiten Schritt die Li-reiche Legierung Li₂₁Si₅ bildet. Es wird angenommen, dass sich metallisches Lithium durch einen Redox-Prozeß, beispielsweise beim Einsatz von Kieselsäureestern wie folgt bildet:

Si(OR)₄ + 4 Li → 4 LiOR + Si

Das entstandene metallische Silicium bildet in einem zweiten Schritt eine der bekannten kristallinen Li-Legierungen (meist die lithiumreichste der existierenden Legierungen, im Falle Si also Li₂₁Si₅). Das als Koppelprodukt entstehende Lithiumalkoholat kann je nach gewählten Herstellbedingungen weiterreagieren, beispielsweise zu Lithiumoxid. Auf diese Weise wird eine mehrkomponentige Beschichtung der Lithiumabformung bestehend aus einer Legierungsschicht und einer salzartigen Li-haltigen Schicht, gebildet.

Natriumarme Lithiummetallpulver, die erfindungsgemäß passiviert worden sind, erweisen sich überraschend als ganz besonders stabil im Kontakt mit reaktiven, polaren Lösungsmitteln, beispielsweise N-Methyl-2-pyrrolidon.
Das erfindungsgemäß passivierte Lithiummetallpulver zeigt im DSC-Test in Suspension mit N-Methyl-2-pyrrolidon (Wassergehalt < ca. 200 ppm) bei mindestens 15-stündiger Lagerung bei 50°C und besonders bevorzugt bei 80°C überraschenderweise keinen signifikanten exothermen Effekt, insbesondere kein "run-away-Phänomen". Dieses Verhalten wird anhand der folgenden Beispiele erläutert.

Die erfindungsgemäß passivierten Lithiummetallabformungen können zur Vorlithiierung von elektrochemisch aktiven Materialien, z.B. Graphit-, Legierungsoder Konversionsanoden für Lithiumbatterien oder nach geeigneter mechanischphysikochemischer Vorbehandlung (Pressen, Abmischen mit Bindermaterialien etc.) für die Herstellung von Metallanoden für Lithiumbatterien verwendet werden.

Die Erfindung wird nachfolgend an Hand von fünf Beispielen und zwei Abbildungen näher erläutert, ohne dass dadurch die beanspruchte Ausführungsbreite beschränkt werden soll.

Die Produktstabilität wird mittels DSC ("differential scanning calorimetry") bestimmt. Es kam eine Apparatur der Firma *Systag,* Schweiz (das Radex-System) zum Einsatz. In die Probengefäße wurden unter Schutzgasatmosphäre etwa 2 g NMP und 0,1 g Lithiummetallpulver eingewogen. Proben wurden bei bestimmten Temperaturen 15 h gelagert. Die Partikelgrößenverteilung wurde mit einem Gerät der der Firma Mettler-Toledo, dem Lasentec-FBRM-in-line-Analysator, bestimmt.

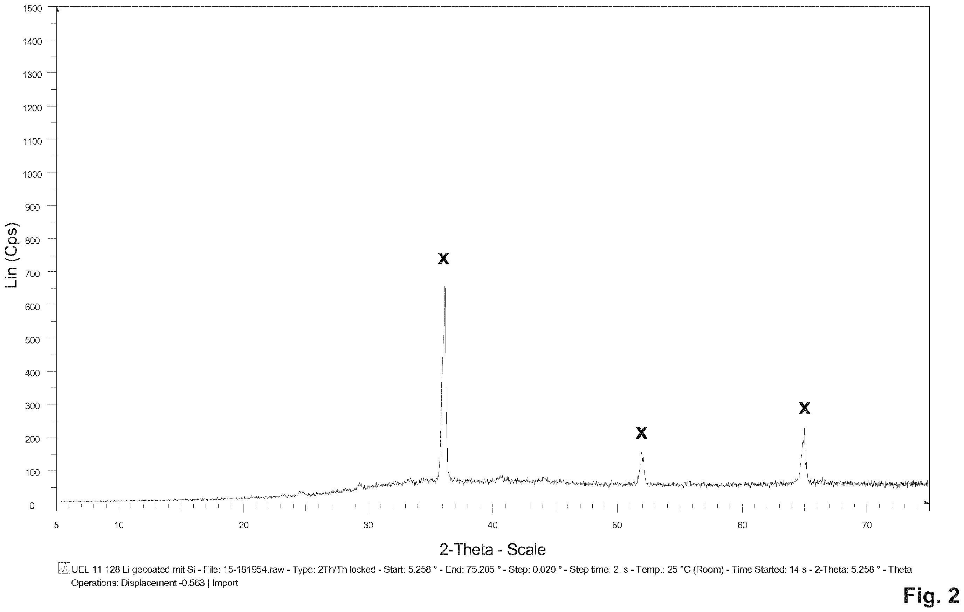

Es zeigen:

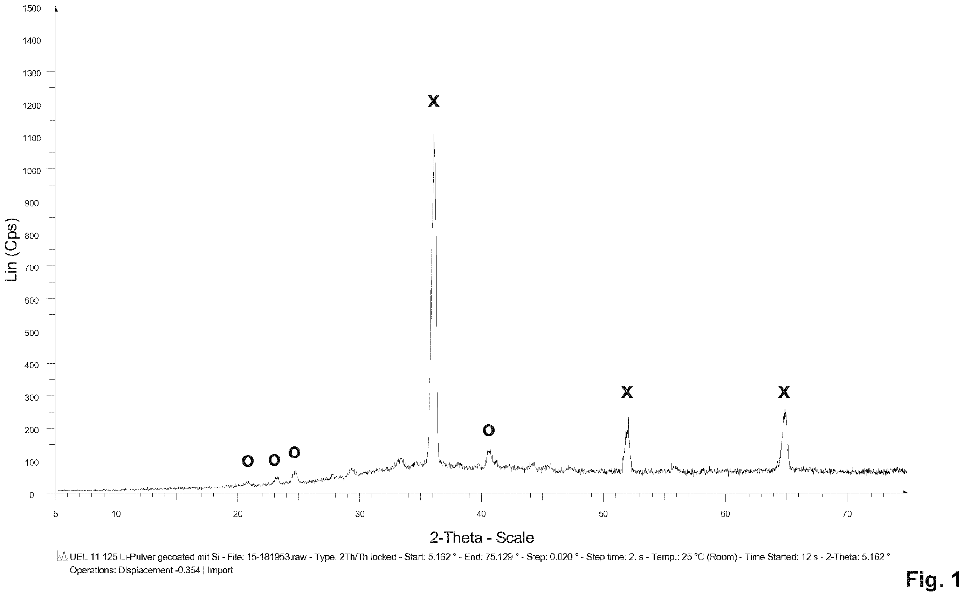

- Figur 1:: Röntgendiffraktogramm des mit einer Si-haltigen Schicht passivierten Metallpulvers aus Beispiel 1
x: Reflexe von Lithiummetall
o: Reflexe von Li₂₁Si₅
- Figur 2:: Röntgendiffraktogramm des mit einer Si-haltigen Schicht passivierten Metallpulvers aus Beispiel 2

### Beispiel 1: Herstellung eines mit einer siliciumhaltigen Schicht passivierten natriumarmen Lithiummetallpulvers (Tetraethylsilikat, "TEOS", als Passivierungsmittel)

In einem trockenen mit Argon inertisierten 2 L-Edelstahldoppelmantelreaktor mit einem Dispergierrührwerk werden 405 g Shellsol^{®} D 100 und 20,1 g Lithiummetallstabschnitte vorgelegt. Das Lithium hat einen Natriumgehalt von 40 ppm. Unter schwachem Rühren (etwa 50 upm) wird durch Mantelheizung die Innentemperatur auf 240°C angehoben und mittels Dispergator eine Metallemulsion hergestellt. Dann werden 1,5 g TEOS gelöst in 10 ml Shellsol^{®} D100 innerhalb von etwa 5 Minuten mit einer Spritze zugegeben. Während der Zugabe wird mit starker Scherwirkung gerührt. Danach wird der Rührer gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 19,2 g (95 % d.Th.);
Mittlere Partikelgröße140 µm (FBRM-Partikelgrößenanalysator von Mettler-Toledo);
Metallgehalt: 99,5 % (gasvolumetrisch);
Stabilität in NMP, Wassergehalt 167 ppm: 15 h stabil bei 80°C; bei 90°C nach 2,5 h run away;
Si-Gehalt: 0,40 Gew%;
Oberflächenuntersuchung per XRD: Phasenanteile von Li₂₁Si₅

### Beispiel 2: Herstellung eines mit einer siliciumhaltigen Schicht passivierten natriumarmen Lithiummetallpulvers (Vinyltriethoxysilan als Passivierungsmittel)

In einem trockenen mit Argon inertisierten 2 L-Edelstahldoppelmantelreaktor mit einem Dispergierrührwerk werden 415 g Shellsol^{®} D 100 und 98,4 g Lithiummetallstabschnitte vorgelegt. Das Lithium hat einen Natriumgehalt von 40 ppm. Unter schwachem Rühren (etwa 50 upm) wird durch Mantelheizung die Innentemperatur auf 240°C angehoben und mittels Dispergator eine Metallemulsion hergestellt. Dann werden 2,7 g Vinyltriethoxysilan gelöst in 20 ml Shellsol^{®} D100 innerhalb von etwa 5 Minuten mit einer Spritze zugegeben. Während der Zugabe wird mit starker Scherwirkung gerührt. Danach wird der Rührer gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 95,2 g (97 % d.Th.);
Mittlere Partikelgröße101 µm (FBRM-Partikelgrößenanalysator von Mettler-Toledo);
Metallgehalt: 99,7 % (gasvolumetrisch);
Stabilität in NMP, Wassergehalt 167 ppm: 15 h stabil bei 80°C; bei 90°C nach 2 h ein schwaches Exotherm (kein run away);
Si-Gehalt: 0,26 Gew%;
Oberflächenuntersuchung per XRD: sehr geringe Phasenanteile von Li₂₁Si₅

### Beispiel 43: Herstellung eines mit einer borhaltigen Schicht passivierten natriumarmen Lithiummetallpulvers (Lithium bis(oxalato)borat, "LiBOB") als Passivierungsmittel)

In einem trockenen mit Argon inertisierten 2 L-Edelstahldoppelmantelreaktor mit einem Dispergierrührwerk werden 396 g Shellsol^{®} D 100 und 19,1 g Lithiummetallstabschnitte vorgelegt. Das Lithium hat einen Natriumgehalt von 40 ppm. Unter schwachem Rühren (etwa 50 upm) wird durch Mantelheizung die Innentemperatur auf 210°C angehoben und mittels Dispergator eine Metallemulsion hergestellt. Dann werden 6,1 g einer 30%igen Lösung von LiBOB in THF innerhalb von etwa 4 Minuten mit einer Spritze zugegeben. Während der Zugabe wird mit starker Scherwirkung gerührt. Danach wird der Rührer gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 20,5 g (107 % d.Th.);
Mittlere Partikelgröße 43 µm (FBRM-Partikelgrößenanalysator von Mettler-Toledo);
Metallgehalt: 96 % (gasvolumetrisch);
Stabilität in NMP, Wassergehalt 167 ppm: 15 h stabil bei 80°C; bei 100°C nach 4 h run away

### Beispiel 4: Herstellung eines mit einer borhaltigen Schicht passivierten natriumarmen Lithiummetallpulvers (Triisopropylborat als Passivierungsmittel)

In einem trockenen mit Argon inertisierten 2 L-Edelstahldoppelmantelreaktor mit einem Dispergierrührwerk werden 435 g Shellsol ^{®}D 100 und 19,6 g Lithiummetallstabschnitte vorgelegt. Das Lithium hat einen Natriumgehalt von 17 ppm. Unter schwachem Rühren (etwa 50 upm) wird durch Mantelheizung die Innentemperatur auf 210°C angehoben und mittels Dispergator eine Metallemulsion hergestellt. Dann werden 2,7 g Triisopropylborat, gelöst in 20 ml Shellsol^{®} D100 innerhalb von etwa 10 Minuten mit einer Spritze zugegeben. Während der Zugabe wird mit starker Scherwirkung gerührt. Danach wird der Rührer gestoppt und die Suspension auf Zimmertemperatur abgekühlt.

Die Suspension wird auf eine Glasnutsche abgelassen, der Filterrückstand mehrmals mit Hexan ölfrei gewaschen und dann vakuumgetrocknet.
Ausbeute: 19,4 g (99 % d.Th.);
Mittlere Partikelgröße 125 µm (FBRM-Partikelgrößenanalysator von Mettler-Toledo);
Metallgehalt: 97 % (gasvolumetrisch);
Stabilität in NMP, Wassergehalt 167 ppm: 15 h stabil bei 80°C; 15 h stabil bei 100°C; bei 120°C nach wenigen Minuten run away;
B-Gehalt: 0,68%

## Patentansprüche

1. Verfahren zur Herstellung einer partikelförmigen, stabilisierten mit legierungsbildenden Elementen beschichteten Lithiummetallabformung, **dadurch gekennzeichnet, dass**
Lithiummetall mit Filmbildungs-Precursoren enthaltend Elemente der 3. und 4. Hauptgruppe des PSE,
wobei als Filmbildungs-Precursor(en) ein oder mehrere Passivierungsmittel der allgemeinen Formeln I oder II:
[AR¹R²R³R⁴]Liₓ (I),
oder
R¹R²R³A-0-AR⁴R⁵R⁶ (II)
worin bedeuten:
R¹R²R³R⁴R⁵R⁶ = unabhängig voneinander Alkyl (C₁-C₁₂), Aryl, Alkoxy Aryloxy- oder Halogen (F, Cl, Br, I); oder zwei Reste R bedeuten zusammengenommen ein 1,2-Diolat, ein 1,2- oder 1,3-Dicarboxylat oder ein 2-Hydroxycarboxylatdianion;
die Reste R¹ bis R⁶ können weitere funktionelle Gruppen enthalten, beispielsweise Alkoxygruppen;
A = Bor, Aluminium, Gallium, Indium, Thallium, Silicium, Germanium, Zinn,Blei;
x = 0 oder 1 für B, Al, Ga, In, Tl;
x = 0 für Si, Ge, Sn, Pb;
im Falle x = 0 und A = B, Al, Ga, In, Tl entfällt R⁴ eingesetzt werden,
bei Temperaturen im Bereich über der Lithiumschmelztemperatur von 180,5°C und 300°C, unter Inertgas in einem organischen, inerten Lösungsmittel als Emulsion des Metalls im Lösungsmittel in Kontakt gebracht wird.

2. Verfahren nach Anspruch 1, **dadurch gekennzeichnet, dass** das Molverhältnis zwischen Li-Metall und Passivierungsmittel 100:0,01 bis 100:5, bevorzugt 100:0,05 bis 100:1 beträgt.

3. Verfahren nach Anspruch 1 oder 2, **dadurch gekennzeichnet, dass** als inertes, organisches Lösungsmittel Kohlenwasserstoffe, ausgewählt aus der Gruppe bestehend aus Hexan, Heptan, Octan, Dekan, Undekan, Dodekan, Toluol, Ethylbenzol, Cumol, entweder in reiner Form oder im Gemisch als kommerziell erhältliche Siedeschnitte eingesetzt werden.

4. Verfahren nach einem oder mehreren der Ansprüche 1 bis 3, **dadurch gekennzeichnet, dass** ein Zusatzcoating bei Temperaturen < 180,5°C vorgenommen wird.

5. Verfahren nach einem oder mehreren der Ansprüche 1 bis 4, **dadurch gekennzeichnet, dass** das 1,2-Diolat 1,2-Ethandiolat ist, das 1,2- oder 1,3-Dicarboxylat Oxalat oder Malonat ist oder das 2-Hydroxycarboxylatdianion Lactat, Glykolat oder Salicylat ist.

## Claims

1. A method for producing a particulate, stabilized lithium metal impression coated with alloy-forming elements, **characterized in that** lithium metal is brought into contact with film-forming precursors containing elements of the main groups 3 and 4 of the Periodic Table of Elements,
wherein one or more passivating agent(s) of general formulas I or II are used as film-forming precursors:
[AR¹R²R³R⁴]Liₓ (I)
or
R¹R² R³A-O-AR⁴R⁵R⁶ (II)
wherein
R¹R²R³R⁴R⁵R⁶ = independently of one another alkyl (C₁-C₁₂), aryl, alkoxy, aryloxy or halogen (F, Cl, Br, I); or two radicals R together denote a 1,2-diolate, a 1,2- or 1,3-dicarboxylate or a 2-hydroxycarboxylate dianion;
radicals R¹ to R⁶ may contain additional functional groups, for example alkoxy groups;
A = boron, aluminum, gallium, indium, thallium, silicon, germanium, tin, lead;
x = 0 or 1 for B, Al, Ga, In, Tl;
x = 0 for Si, Ge, Sn, Pb;
when x = 0 and A = B, Al Ga, In, Tl, then R⁴ is omitted,
at temperatures in the range of above the lithium melting temperature of 180.5°C and 300°C under an inert gas in an organic, inert solvent as emulsion of the metal in the solvent.

2. The method according to claim 1, **characterized in that** the molar ratio between lithium metal and passivating agent is 100 : 0.01 to 100 : 5, preferably 100 : 0.05 to 100 : 1.

3. The method according to claim 1 or 2, **characterized in that** as inert organic solvent hydrocarbons are used selected from the group consisting of hexane, heptane, octane, decane, undecane, dodecane, toluene, ethylbenzene, cumene, in pure form or in admixture as commercially available boiling cuts.

4. The method according to one or more of claims 1 to 3, **characterized in that** an additional coating step is performed at temperatures of < 180.5° C.

5. The method according to one or more of claims 1 to 4, **characterized in that** the 1,2-diolate is 1,2-ethanediolate, the 1,2- or 1,3-dicarboxylate is oxalate or malonate, or the 2-hydroxycarboxylate dianion is lactate, glycolate or salicylate.

## Revendications

1. Procédé de préparation d'un moulage en lithium métallique particulaire, stabilisé et recouvert d'une couche d'éléments formant un alliage, **caractérisé en ce que**
l'on met du lithium métallique en contact avec des précurseurs filmogènes comportant des éléments des groupes principaux 3 et 4 de la Classification Périodique des Eléments,
étant entendu qu'on utilise, en tant que précurseur(s) filmogène(s), un ou plusieurs agents de passivation, de formule générale I ou II :
[AR¹R²R³R⁴]Liₓ (I)
ou
R¹R²R³A-O-AR⁴R⁵R⁶ (II)
dans lesquelles formules
- R¹, R², R³, R⁴, R⁵ et R⁶ représentent chacun, indépendamment les uns des autres, un groupe alkyle en C₁-C₁₂, aryle, alcoxy ou aryloxy ou un atome d'halogène (F, Cl, Br, I), ou deux symboles R représentent des entités qui constituent ensemble un 1,2-diolate, un 1,2-dicarboxylate ou 1,3-dicarboxylate, ou un dianion 2-hydroxy-carboxylate,
étant entendu que les groupes symbolisés par R¹ à R⁶ peuvent comporter des groupes fonctionnels supplémentaires, par exemple des groupes alcoxy,
- A représente un atome de bore, d'aluminium, de gallium, d'indium, de thallium, de silicium, de germanium, d'étain ou de plomb,
- l'indice x vaut 0 ou 1 pour B, Al, Ga, In ou Tl,
mais vaut 0 pour Si, Ge, Sn ou Pb,
étant entendu que, dans le cas où x vaut 0 et A représente B, Al, Ga, In ou Tl, R⁴ ne représente rien,
à des températures situées au-dessus de la température de fusion du lithium, de 180,5 °C, et allant jusqu'à 300 °C, sous atmosphère de gaz inerte et dans un solvant organique inerte, le métal se trouvant à l'état d'émulsion dans le solvant.

2. Procédé conforme à la revendication 1, **caractérisé en ce que** le rapport molaire entre le lithium métallique et l'agent de passivation vaut de 100/0,01 à 100/5, et de préférence de 100/0,05 à 100/1.

3. Procédé conforme à la revendication 1 ou 2, **caractérisé en ce qu'**on utilise, en tant que solvant organique inerte, des hydrocarbures choisis dans l'ensemble formé par les hexane, heptane, octane, décane, undécane, dodécane, toluène, éthyl-benzène et cumène, soit à l'état pur, soit à l'état de mélange sous forme de coupe de distillation disponible dans le commerce.

4. Procédé conforme à l'une ou plusieurs des revendications 1 à 3, **caractérisé en ce qu'**on effectue un enrobage additionnel à des températures inférieures à 180,5 °C.

5. Procédé conforme à l'une ou plusieurs des revendications 1 à 4, **caractérisé en ce que** le 1,2-diolate est éthane-1,2-diolate, le 1,2-dicarboxylate ou 1,3-dicarboxylate est oxalate ou malonate, ou le dianion 2-hydroxy-carboxylate est lactate, glycolate ou salicylate.
